# EUROPEAN PATENT APPLICATION

(11) **EP 3 527 540 A1**
(43) Date of publication of application: **21.08.2019**
(21) Application number: 17879159.6
(22) Date of filing: 13.11.2017
(51) Int. Cl.: C03C 8/00, B41M 1/34, B41J 2/045

(54) **LARGE-PARTICLE CERAMIC GLAZE WITH A HIGH CONTENT OF SOLIDS**

(30) Priority: 05.12.2016 ES 201631554
(71) Applicant: Torrecid, S.A., 12110 Alcora (Castellón) (ES)
(72) Inventor: RUIZ VEGA, Óscar, 12110 Alcora (Castellón) (ES); MADRIGAL VILLEGAS, José Manuel, 12110 Alcora (Castellón) (ES); TIRADO FRANCISCO, Francisco Alejandro, 12110 Alcora (Castellón) (ES); GARCÍA VAL, Marc, 12110 Alcora (Castellón). (ES)
(74) Representative: Carlos Hernando, Borja
(86) International application number: PCT/ES2017/070749
(87) International publication number: WO 2018/104568

(57) **Abstract**

The present invention relates to a ceramic glaze with improved aesthetic and technical possibilities for application on ceramic substrates by means of digital inkjet technology, and which comprises a high content of frits and/or ceramic raw materials having a large particle size. Said glaze also comprises water, at least one solvent from the family of glycols, carboxymethylcellulose, sodium chloride, and/or at least one acrylic compound, and/or at least one polyurethane compound.

## Description

### Object of the invention

The object of the present invention relates to ceramic glazes having a large particle size and a high solid content to be applied on ceramic substrates by means of inkjet technologies with improved aesthetic and technical possibilities.

### Description of the state of the art

The incorporation of inkjet technology as a method for decorating and glazing ceramic substrates has been increasing over the last ten years. Among other aspects, progress was observed in the inkjet printheads and in the volume of droplet the printheads deposit. In this sense, equipment based on the DOD (drop-on-demand) inkjet printhead technology is available, said being equipment being referred to as high-resolution equipment as they allow achieving definitions greater than 200 dpi and furthermore generate droplets with a volume of tens of picoliters.

Based on this type of digital printing technology, ceramic glaze compositions such as those protected in patent ES2468553 can be found in the state of the art. This patent describes a digital glaze composition for ceramic tiles comprising a water-free solvent, inorganic particles of frit and/or ceramic raw materials, and at least one dispersant. Likewise, the particle size of the inorganic solids is less than 1.2 micrometers, as required in the DOD technology, so as to prevent particle sedimentation when the composition is at the required viscosity, and therefore blockage of the inkjet printheads. Furthermore, it is known in the state of the art that, at a specific percentage of solids in a ceramic glaze, viscosity increases as the particles decreases. For that reason, the solid content of these digital glazes must not exceed 25%-30% to prevent the viscosity from going above 0.035 Pa.s (equivalent to 35 cP in the centimeter-gram-second system that is more widely used in the state of the art).

These two characteristics, i.e., a small particle size and a low solid content, have several consequences. On one hand, it is not possible to deposit amounts greater than 200 g/m2, and therefore the aesthetic and technical possibilities are limited (due to the small thickness of the ceramic glaze layer). Printing the sufficient amount of glaze on the ceramic substrate to generate reliefs of up to 5 mm, a fundamental aspect when conferring aesthetic properties to the ceramic tiles, is therefore impossible. Furthermore, these glaze compositions do not allow depositing large particles, such as mica-type metallic or flake particles, on the substrate. Finally, the small particle size and the low solid content lead to cracks in the glaze layer during the industrial drying process before firing, giving rise to defects once the ceramic tile is fired.

Meanwhile, the digital inkjet technology intended for decorating and glazing ceramic tiles offers other options such as solenoid valves systems or the options described in patent applications EP1972450A2 and EP2085225A2. These systems are characterized by depositing a droplet with a volume of several tens of picoliters.

According to this technology, ceramic compositions can also be found in the state of the art. In that sense, patent application ES2489293 protects a glaze comprising a liquid medium formed by water and other solvents, an inorganic solid part formed by frits and/or ceramic raw materials, and additives soluble in the liquid medium. These glazes allow depositing amounts greater than 200 g/m2. However, they have the limitation of the particle size being less than 50 micrometers to prevent particle sedimentation at the working viscosity comprised between 40 and 50 cP. As a result, the aesthetic and technical effects achieved are limited because it is impossible to perform printing on mica-type metallic or flake particles, for example. Furthermore, reliefs of up to 5 mm cannot be obtained. Additionally, another problem derived from the small particle size and the low solid content is that cracks occur during the industrial drying phase before firing, generating defects in the ceramic tile once fired.

### Description of the invention

Throughout the invention and claims the word "comprises" and variants thereof do not seek to exclude other technical features, additives, components, or steps. For those skilled in the art, other objects, advantages, and features of the invention will be inferred in part from the description and in part from putting the invention into practice.

The present invention provides a ceramic glaze for application by means of inkjet technology comprising a high content of frits and/or ceramic raw materials having a large particle size and are stable, i.e., do not produce sediment when they are in the printer, preventing problems such as blockage of the injection systems and overcoming the limitations of the prior state of the art.

The ceramic glaze object of the present invention is intended for glazing ceramic substrates. Therefore, the method of application consists of depositing the ceramic glaze object of the present invention on a ceramic substrate. The ceramic substrate and the ceramic glaze deposited on the substrate are then subjected as a whole to a firing cycle. Optionally, there is the possibility of depositing other glazes, inks, or solids of different nature (frits, metals, oxides, etc.) between glazing and firing for the purpose of generating additional aesthetic and technical effects. It is also common to apply two types of ceramic glazes consecutively, i.e., a first ceramic glaze, also known as "engobe", which acts as an intermediate adherence layer between the ceramic substrate, and a second ceramic glaze responsible for conferring aesthetic and technical properties to the ceramic tile.

The term "ceramic substrate" as used in the present invention refers to any polyhedral surface with regular or irregular faces, consisting of a mixture of materials of different nature (clays, kaolin, frits, silicates, feldspars, oxides, etc.) that is formed by means of conventional techniques in the ceramic sector such as pressing, lamination, or extrusion, among others, and can be glazed or unglazed as well as unfired or subjected to a firing cycle.

The present invention thereby protects a ceramic glaze for glazing by means of inkjet technology comprising water in a percentage comprised between 15% and 35% with respect to the total weight of the ceramic glaze, at least one solvent from the family of glycols in a percentage comprised between 20% and 40% with respect to the total weight of the ceramic glaze and with a viscosity comprised between 20 cP (0.02 Pa.s) and 90 cP (0.09 Pa.s) at 25°C, at least one frit and/or at least one ceramic raw material with a particle size D100 comprised between 40 micrometers and 65 micrometers, preferably between 50 micrometers and 65 micrometers, and in a percentage comprised between 40% and 55% with respect to the total weight of the ceramic glaze, carboxymethylcellulose in a percentage comprised between 0.10% and 2% with respect to the total weight of the ceramic glaze, sodium chloride, and/or at least one acrylic compound, and/or at least polyurethane compound in a percentage comprised between 0.1% and 5% with respect to the total weight of the ceramic glaze.

"Total weight of the ceramic glaze" is understood to be the sum of weights of the liquid part and the solid part, before the application thereof on the ceramic substrate.

The term "glycol" as used in the present invention refers to any solvent formed by a linear or cyclic, branched or unbranched, chain of carbon atoms containing one or more hydroxyl and/or ether groups bound to the carbon atoms. Examples of glycols include, without limitation, ethylene glycol, diethylene glycol, propylene glycol, polypropylene glycol, and polyethylene glycol.

According to the present invention, the solvent or solvents from the family of glycols is selected from the group comprising monoethylene glycol, and/or monopropylene glycol, and/or diethylene glycol, and/or triethylene glycol, and/or polyethylene glycol having a molecular weight equal to or less than 400 g/mol and/or glycerol.

Likewise, in the present invention, "frit" is understood to be the result of a mixture of inorganic compounds that has been subjected to a melting process and then cooling to obtain an amorphous glassy compound, i.e., without crystalline structure.

Given that the glazes are subjected to heat treatment once applied on the ceramic substrate, the frits must have thermal properties adapted to their particle size. In this sense, the frit or mixture of frits according to the present invention is characterized by having a coefficient of thermal expansion comprised between 50 x 10-7 °C-1 and 79 x 10-7 °C-1 at 300°C at a particle size D100 comprised between 40 micrometers and 65 micrometers.

The term "ceramic raw material" as used in the present invention refers to any chemical compound other than frits which is incorporated directly to the composition of the ceramic glaze object of the invention. Examples of ceramic raw material include, without limitation, sodium feldspar, potassium feldspar, lithium feldspar, alumina, clays, zirconium silicate, zinc oxide, dolomite, kaolin, quartz, micas, metallic particles, barium oxide, mullite, wollastonite, tin oxide, nepheline, bismuth oxide, boron oxide, colemanite, calcium carbonate, cerium oxide, cobalt oxide, copper oxide, iron oxide, aluminum phosphate, manganese oxide, chromium oxide, spodumene, talc, magnesium oxide, cristobalite, rutile, and anatase.

Preferably, the ceramic raw materials are selected from the group comprising AI203, and/or SiO2, and/or ZrSiO4, and/or sodium feldspar, and/or potassium feldspar, and/or lithium feldspar, and/or nepheline, and/or mullite, and/or wollastonite, and/or kaolinite clay, and/or illite clay, and/or bentonites, and/or micas, and/or metallic particles.

Another aspect of the present invention includes the solid part comprising, in addition to at least one frit and/or at least one ceramic raw material, at least one ceramic pigment in a percentage comprised between 1% and 10% with respect to the total weight of the ceramic glaze and with a particle size D100 comprised between 7 micrometers and 25 micrometers.

The known glazes comprising a liquid medium formed by water and other solvents, an inorganic solid part formed by frits and/or ceramic raw materials and additives soluble in the liquid medium, generate foam and bubbles in the compositions when they are moving in the circuit of the printer. The presence of foam or bubbles is a significant problem when printing is performed by means of inkjet technology because the printhead injects air instead of glaze, which causes a defect in the final application.

To prevent the formation of the mentioned foam and bubbles, the ceramic glaze according to the present invention incorporates in its composition carboxymethylcellulose derivatives selected from the group of carboxymethylcelluloses which generate a suitable viscosity when dissolved in water and glycols.

Said carboxymethylcellulose derivatives are part of the composition in a percentage comprised between 0.10% and 2% with respect to the total weight of the ceramic glaze. It has been experimentally proven that percentages greater than said 2% lead to viscosities at 25°C as a function of shear force that are greater than 100 cP at 10 s-1 and 75 cP at 100 and 1000 s-1, so they are outside the scope of the present invention.

It is important to point out that carboxymethylcelluloses are defined as a function of the viscosity they generate when they are dissolved in water at a specific percentage. The carboxymethylcellulose is preferably selected from the group of carboxymethylcelluloses which generate a viscosity comprised between 5 cP and 500 cP at 25°C when it is dissolved in water in a percentage of 2%.

Additionally, an aspect of the present invention includes the acrylic compound being sodium polyacrylate and/or potassium polyacrylate and the polyurethane compound being an ethoxylated polyurethane.

Another aspect of the ceramic glaze object of the invention is that it contains at least one wetting agent in a percentage comprised between 0.1% and 2% with respect to the total weight of the ceramic glaze.

In the glaze formulation for inkjet technology, it is fundamental to define the value of viscosity as a function of shear force both when the glaze is practically at rest (shear force of 10 s-1) and when it is moving in the circuit of the printer (shear force comprised between 100 s-1 and 1000 s-1). The ceramic glaze object of the present invention is therefore characterized by having the following values of viscosity at 25°C as a function of shear force:
Between 50 cP and 100 cP at 10 s-1 of shear force.
Between 40 cP and 75 cP at 100 s-1 of shear force.
Between 40 cP and 75 cP at 1000 s-1 of shear force.

### Preferred embodiments

To complete the description that is being made and for the purpose of helping to better understand the features thereof, several embodiments of ceramic glazes according to the invention are provided in the present specification. These examples are provided for illustrative purposes and do not seek to limit the present invention. Furthermore, the present invention covers all the possible combinations of particular and preferred embodiments herein indicated.

### Example 1

A ceramic glaze according to the present invention was prepared, said glaze comprising the following expressed in percentage by weight:
24.20% of water,
12.00% of polyethylene glycol having a molecular weight of 200 g/mol,
17.40% of diethylene glycol having a molecular weight 106.12 g/mol,
9.10% of AI203 with a particle size D100 comprised between 40 micrometers and 65 micrometers,
30.50% of sodium feldspar with a particle size D100 comprised between 40 micrometers and 65 micrometers,
5.40% of potassium feldspar with a particle size D100 comprised between 40 micrometers and 65 micrometers,
0.25% of carboxymethylcellulose,
1.00% of sodium polyacrylate,
0.15% of wetting agent.

The viscosity properties of this ceramic glaze at 25°C are indicated below:

| | |
|---|---|
| Viscosity (25°C) at 10 s-1 | 57 |
| Viscosity (25°C) at 100 s-1 | 43 |
| Viscosity (25°C) at 1000 s-1 | 41 |

The ceramic glaze was applied on an unfired porcelain ceramic substrate by means of inkjet technology, generating a relief with a maximum height of 5.0 mm. The grammage of application was 1000 g/m2.

### Example 2

An engobe-type ceramic glaze according to the present invention was prepared, said glaze comprising the following expressed in percentage by weight:
33.65% of water,
21.30% of diethylene glycol having a molecular weight 106.12 g/mol,
4.50% of AI203 with a particle size D100 comprised between 40 micrometers and 65 micrometers,
10.00% of SiO2 with a particle size D100 comprised between 40 micrometers and 65 micrometers,
2.15% of ZrSiO4 with a particle size D100 comprised between 40 micrometers and 65 micrometers,
17.00% of sodium feldspar with a particle size D100 comprised between 40 micrometers and 65 micrometers,
10.00% of nepheline with a particle size D100 comprised between 40 micrometers and 65 micrometers,
0.15% of carboxymethylcellulose,
0.50% of sodium polyacrylate,
0.65% of ethoxylated polyurethane
0.10% of NaCI.

The viscosity properties of this engobe-type ceramic glaze at 25°C are indicated below:

| | |
|---|---|
| Viscosity (25°C) at 10 s-1 | 59 |
| Viscosity (25°C) at 100 s-1 | 46 |
| Viscosity (25°C) at 1000 s-1 | 45 |

The engobe-type ceramic glaze was applied by means of inkjet technology on the part obtained in Example 1. The grammage of application was 400 g/m2.

### Example 3

A ceramic glaze according to the present invention was prepared, said glaze comprising the following expressed in percentage by weight:
28.17% of water,
24.53% of diethylene glycol having a molecular weight 106.12 g/mol,
44.10% of a frit with a coefficient of thermal expansion at 300°C of 62 x 10-7 °C-1 and a particle size D100 comprised between 50 micrometers and 65 micrometers,
2.00% of AI203 with a particle size D100 comprised between 40 micrometers and 65 micrometers,
0.30% of carboxymethylcellulose,
0.50% of sodium polyacrylate,
0.15% of NaCl,
0.25% of wetting agent.

The viscosity properties of this ceramic glaze at 25°C are indicated below:

| | |
|---|---|
| Viscosity (25°C) at 10 s-1 | 75 |
| Viscosity (25°C) at 100 s-1 | 52 |
| Viscosity (25°C) at 1000 s-1 | 48 |

The ceramic glaze was applied by means of inkjet technology on the part obtained in Example 2. The grammage of this second ceramic glaze was 650 g/m2. The resulting part was subjected to a firing cycle at a maximum temperature of 1195 °C. Once heat treatment has been performed, a ceramic tile with relief and shiny effect was obtained.

### Example 4

A ceramic glaze according to the present invention was prepared, said glaze comprising the following expressed in percentage by weight:
26.70% of water,
26.90% of diethylene glycol having a molecular weight 106.12 g/mol,
5.50% of a frit with a coefficient of thermal expansion at 300°C of 64 x 10-7 °C-1 and a particle size D100 comprised between 50 micrometers and 65 micrometers,
27.50% of a frit with a coefficient of thermal expansion at 300°C of 59 x 10-7 °C-1 and a particle size D100 comprised between 40 micrometers and 65 micrometers,
5.00% of sodium feldspar with a particle size D100 comprised between 40 micrometers and 65 micrometers,
6.90% of mullite with a particle size D100 comprised between 40 micrometers and 65 micrometers,
0.35% of carboxymethylcellulose,
0.75% of sodium polyacrylate,
0.10% of NaCl,
0.30% of wetting agent.

The viscosity properties of this ceramic glaze at 25°C are indicated below:

| | |
|---|---|
| Viscosity (25°C) at 10 s-1 | 67 |
| Viscosity (25°C) at 100 s-1 | 46 |
| Viscosity (25°C) at 1000 s-1 | 44 |

The ceramic glaze was applied by means of inkjet technology on the part obtained in Example 2. The grammage of this second ceramic glaze was 600 g/m2. The resulting part was subjected to a firing cycle at a maximum temperature of 1195 °C. Once heat treatment has been performed, a ceramic tile with relief and matte effect was obtained.

### Example 5

A engobe-type ceramic glaze according to the present invention was prepared, said glaze comprising the following expressed in percentage by weight:
32.75% of water,
17.04% of diethylene glycol having a molecular weight 106.12 g/mol,
5.00% of polyethylene glycol having a molecular weight of 400 g/mol,
10.30% of a frit with a coefficient of thermal expansion at 300°C of 61 x 10-7 °C-1 and a particle size D100 comprised between 40 micrometers and 65 micrometers,
4.50% of AI203 with a particle size D100 comprised between 40 micrometers and 65 micrometers,
2.25% of ZrSiO4 with a particle size D100 comprised between 40 micrometers and 65 micrometers,
22.00% of sodium feldspar with a particle size D100 comprised between 40 micrometers and 65 micrometers,
5.00% of potassium feldspar with a particle size D100 comprised between 40 micrometers and 65 micrometers,
0.11% of carboxymethylcellulose,
0.75% of sodium polyacrylate,
0.10% of NaCl,
0.20% of wetting agent.

The viscosity properties of this engobe-type ceramic glaze at 25°C are indicated below:

| | |
|---|---|
| Viscosity (25°C) at 10 s-1 | 70 |
| Viscosity (25°C) at 100 s-1 | 47 |
| Viscosity (25°C) at 1000 s-1 | 44 |

The engobe-type ceramic glaze was applied by means of inkjet technology on an unfired single-firing ceramic substrate. The grammage of application was 400 g/m2.

### Example 6

A ceramic glaze according to the present invention was prepared, said glaze comprising the following expressed in percentage by weight:
20.85% of water,
5.00% of polyethylene glycol having a molecular weight of 200 g/mol,
20.50% of diethylene glycol having a molecular weight 106.12 g/mol,
5.00% of triethylene glycol having a molecular weight 150.17 g/mol,
33.30% of a frit with a coefficient of thermal expansion at 300°C of 59 x 10-7 °C-1 and a particle size D100 comprised between 40 micrometers and 65 micrometers,
4.80% of mullite with a particle size D100 comprised between 40 micrometers and 65 micrometers,
9.45% of sodium feldspar with a particle size D100 comprised between 40 micrometers and 65 micrometers
0.35% of carboxymethylcellulose,
0.35% of sodium polyacrylate,
0.10% of NaCl,
0.30% of wetting agent.

The viscosity properties of this ceramic glaze at 25°C are indicated below:

| | |
|---|---|
| Viscosity (25°C) at 10 s-1 | 95 |
| Viscosity (25°C) at 100 s-1 | 73 |
| Viscosity (25°C) at 1000 s-1 | 70 |

The ceramic glaze was applied by means of inkjet technology on the part obtained in Example 5. The grammage of this second ceramic glaze was 700 g/m2. The resulting part was subjected to a single-firing cycle at a maximum temperature of 1140°C. Once heat treatment has been performed, a ceramic tile with glossy matte effect was obtained.

## Claims

1. A ceramic glaze for glazing by means of digital technology, comprising:
a. water in a percentage comprised between 15% and 35% with respect to the total weight of the ceramic glaze,
b. at least one solvent from the family of glycols in a percentage comprised between 20% and 40% with respect to the total weight of the ceramic glaze and with a viscosity comprised between 20 cP and 90 cP at 25°C,
c. at least one frit and/or at least one ceramic raw material with a particle size D100 comprised between 40 micrometers and 65 micrometers and in a percentage comprised between 40% and 55% with respect to the total weight of the ceramic glaze,
d. carboxymethylcellulose in a percentage comprised between 0.10% and 2% with respect to the total weight of the ceramic glaze.
e. sodium chloride, and/or at least one acrylic compound, and/or at least one polyurethane compound in a percentage comprised between 0.1% and 5% with respect to the total weight of the ceramic glaze.

2. The ceramic glaze according to claim 1, wherein the glycols are selected from the group comprising monoethylene glycol, and/or monopropylene glycol, and/or diethylene glycol, and/or triethylene glycol, and/or polyethylene glycol having a molecular weight equal to or less than 400 g/mol and/or glycerol.

3. The ceramic glaze according to claim 1, wherein the frit or mixture of frits has a coefficient of thermal expansion comprised between 50 x 10-7 °C-1 and 79 x 10-7 °C-1 at 300°C.

4. The ceramic glaze according to claim 1, wherein the ceramic raw materials are selected from the group comprising Al2O3, and/or SiO2, and/or ZrSiO4, and/or sodium feldspar, and/or potassium feldspar, and/or lithium feldspar, and/or nepheline, and/or mullite, and/or wollastonite, and/or kaolinite clay, and/or illite clay, and/or bentonites, and/or micas, and/or metallic particles.

5. The ceramic glaze according to claim 1, containing at least one ceramic pigment in a percentage comprised between 1% and 10% with respect to the total weight of the ceramic glaze and with a particle size D100 comprised between 7 micrometers and 25 micrometers.

6. The ceramic glaze according to claim 1, wherein the carboxymethylcellulose is selected from the group of carboxymethylcelluloses which generate a viscosity comprised between 5 cP and 500 cP at 25°C when it is dissolved in water in a percentage of 2%.

7. The ceramic glaze according to claim 1, wherein the acrylic compound is selected from the group comprising sodium polyacrylate and/or potassium polyacrylate.

8. The ceramic glaze according to claim 1, wherein the polyurethane compound is an ethoxylated polyurethane.

9. The ceramic glaze according to claim 1 containing at least one wetting agent which is in a percentage comprised between 0.1% and 2% with respect to the total weight of the ceramic glaze.
